# EUROPÄISCHE PATENTSCHRIFT

(11) **EP 3 066 812 B1**
(45) Veröffentlichungstag und Bekanntmachung des Hinweises auf die Patenterteilung: **27.02.2019**
(21) Anmeldenummer: 14799986.6
(22) Anmeldetag: 10.11.2014
(51) Int. Cl.: H04L 29/06, H04W 12/02, H04L 9/00, H04L 9/08

(54) **VERFAHREN ZUR SICHERUNG VON TELEKOMMUNIKATIONSVERKEHRSDATEN**
METHOD FOR SECURING TELECOMMUNICATIONS TRAFFIC DATA
PROCÉDÉ DE SÉCURISATION DE DONNÉES DE TRAFIC DE TÉLÉCOMMUNICATION

(30) Priorität: 09.11.2013 DE 102013112341
(43) Veröffentlichungstag der Anmeldung: 14.09.2016
(73) Patentinhaber: Uniscon universal identity control GmbH, 80992 München (DE)
(72) Erfinder: JÄGER, Hubert, 82049 Pullach (DE)
(74) Vertreter: 2s-ip Schramm Schneider Bertagnoll Patent- und Rechtsanwälte Part mbB
(86) Internationale Anmeldenummer: PCT/EP2014/074200
(87) Internationale Veröffentlichungsnummer: WO 2015/067809

(56) Entgegenhaltungen:
- WO-A1-2004/109998
- US-B1- 8 180 917
- KOTZANIKOLAOU P: "Data Retention and Privacy in Electronic Communications", SECURITY & PRIVACY, IEEE, IEEE SERVICE CENTER, LOS ALAMITOS, CA, US, Bd. 6, Nr. 5, 1. September 2008 (2008-09-01), Seiten 46-52, XP011235840, ISSN: 1540-7993, DOI: 10.1109/MSP.2008.114 ISBN: 978-0-8186-0629-8

## Beschreibung

### Gebiet der Erfindung

Die Erfindung betrifft ein Verfahren zur Sicherung von Telekommunikationsverkehrsdaten, die bei einer Nutzung eines Telekommunikationsdienstes von einer Anzahl von Teilnehmern des Telekommunikationsdienstes bei dem Telekommunikationsdienstleister des Telekommunikationsdienstes anfallen.

### Hintergrund der Erfindung

In einigen Ländern, etwa der Bundesrepublik Deutschland, werden bei einer Vorratsdatenspeicherung personenbeziehbare bzw. personenbezogene Daten durch oder für sämtliche Stellen gespeichert, ohne dass die Daten aktuell benötigt werden. Zweck einer solchen Vorratsdatenspeicherung soll eine verbesserte Möglichkeit der Verhütung und Verfolgung von Straftaten sein. Hierzu müssen die Daten über einen bestimmten Zeitraum gespeichert werden, damit sie beispielsweise für Strafverfolgungszwecke zur Verfügung stehen. Üblicherweise wird die Vorratsdatenspeicherung von dem Anbieter bzw. Dienstleister eines Telekommunikationsdienstes durchgeführt.

Um zu gewährleisten, dass der Anbieter des Telekommunikationsdienstes keine unberechtigten Zugriffe auf die Verkehrsdaten seiner Kunden hat, um etwa Persönlichkeitsprofile zu erstellen, ist es bekannt, die Verbindungsdaten in einer gesicherten Umgebung zu speichern und vor der Speicherung zu verschlüsseln. Die gesicherte Umgebung wird auch als versiegelte Infrastruktur bezeichnet. Die gesicherte Umgebung bzw. versiegelte Infrastruktur verhindert also, dass weder der Betreiber der Infrastruktur noch der den Telekommunikationsdienst anbietende Telekommunikationsdienstleister oder ein sonstiger Dritter auf diese Daten zugreifen kann. Weiter ist es bekannt, die Telekommunikationsdaten bzw. Verbindungsdaten mit zwei unterschiedlichen Verschlüsselungsschlüsseln zu verschlüsseln, wobei einer der beiden Schlüssel bei einer vertrauenswürdigen Instanz, etwa einem Notar hinterlegt wird. Dadurch wird ein unberechtigter Zugriff auf die Verbindungs- bzw. Verkehrsdaten noch effizienter verhindert, denn für den Zugriff ist in jedem Fall der bei der vertrauenswürdigen Instanz hinterlegte Schlüssel notwendig.

Um auch die zwischen den Teilnehmern eines Telekommunikationsdienstes ausgetauschten (Nutz-)Daten, etwa elektronische Nachrichten oder elektronische Dokumente, vor einem unberechtigten Zugriff des Telekommunikationsdienstleisters oder sonstiger Dritter zu verhindern, ist es bekannt, die von einem Teilnehmer empfangenen Daten ebenfalls zu verschlüsseln, sodass nur jene Teilnehmer Zugriff auf die Daten haben, für die die Daten bestimmt sind. Sowohl die Verschlüsselungsals auch die Entschlüsselungsschlüssel können in der vorstehend genannten gesicherten Umgebung gespeichert werden. Damit ist gewährleistet, dass weder der Telekommunikationsdienstleister noch sonstige Dritte auf die Verkehrsdaten oder auf die Nutzdaten Zugriff haben. Ein unberechtigtes Auswerten beispielsweise der Verkehrsdaten im Rahmen einer Rasterfahndung wird dadurch effektiv verhindert, sofern beispielsweise keine richterliche Anordnung vorliegt, die die Verwendung des bei einer vertrauenswürdigen Instanz, etwa einem Notar, hinterlegten Schlüssel erlaubt.

Dieses aus dem Stand der Technik bekannte Verfahren zur Sicherung von Verkehrsdaten und Nutzdaten hat allerdings den Nachteil, dass, selbst wenn die Teilnehmer eines Telekommunikationsdienstes über gesicherte, etwa verschlüsselte Kommunikationsverbindungen Daten untereinander austauschen, der Telekommunikationsdienstleister die Möglichkeit hat, alleine bereits durch Beobachtung des Datenverkehrs die Information abzuleiten, wer mit wem kommuniziert. Diese Information kann der Telekommunikationsdienstleister selbst dann erhalten, wenn die Kommunikation zwischen den Teilnehmern und dem Telekommunikationsdienst verschlüsselt erfolgt, weil für die Information, wer mit wem kommuniziert, der Inhalt der zwischen den Teilnehmern ausgetauschten Daten nicht benötigt wird.

So kann z.B. aus dem Vergleich der Größen von Nachrichten, die durch einen Telekommunikationsdienst entgegengenommen und dann weiterverteilt werden, auf Sender und Empfänger geschlossen werden, selbst wenn Sender und Empfänger in den einzelnen Nachrichten zusammen nicht entnehmbar sind, weil sie in den Nachrichten gar nicht oder etwa nur in verschlüsselter Form enthalten sind. Dies sei an einem einfachen Beispiel erläutert. Wenn ein erster Teilnehmer eine für einen zweiten Teilnehmer bestimmtes elektronisches Dokument (erste Nachricht) in verschlüsselter Form nicht direkt an den zweiten Teilnehmer sendet sondern in einer gegen Zugriffe von außen gesicherter Umgebung hinterlegt, von wo das Dokument als zweite Nachricht dann an den zweiten Teilnehmer ebenfalls verschlüsselt weitergeleitet wird, kann alleine durch Größenvergleich der in die gesicherte Umgebung hineinlaufenden und herauskommenden Nachrichten eine gewisse Zuordnung hergestellt und daraus auf Sender und Empfänger der Nachrichten geschlossen werden. Hierbei hilft es nicht, wenn z.B. in der ersten Nachricht der Empfänger (zweiter Teilnehmer) nur in verschlüsselter Form enthalten ist und in der zweiten Nachricht (erster Teilnehmer) nur der Absender verschlüsselt enthalten ist.

Das oben beschriebene Problem tritt ferner noch verschärft dann auf, wenn ein Telekommunikationsdienst nach dem Erhalt einer (ersten) Nachricht, etwa eines elektronischen Dokuments, von einem Teilnehmer jenen Teilnehmer, für den die Nachricht bestimmt ist, mit Hilfe einer weiteren Nachricht das Vorliegen einer für ihn bestimmten Nachricht informiert. Weil der Datenaustausch zwischen den Teilnehmern und dem Telekommunikationsdienst an sich für den Telekommunikationsdienstleister immer "sichtbar" ist, kann der Telekommunikationsdienstleister, wie zuvor beschrieben, aus der Tatsache, dass eine Nachricht für einen bestimmten Teilnehmer von einem Teilnehmer hinterlegt worden ist und der Teilnehmer, für den die Nachricht bestimmt ist, über das Vorliegen der Nachricht informiert wird, die Information ableiten, dass die beiden Teilnehmer miteinander kommunizieren, selbst wenn der Datenaustausch an sich verschlüsselt erfolgt und wenn der Teilnehmer, für den die Nachricht bestimmt ist, diese von dem Telekommunikationsdienst nicht anfordert.

Somit sind die aus dem Stand der Technik bekannten Verfahren zur Vorratsdatenspeicherung trotz hoher Sicherheitsstandards nicht ausreichend geschützt bzw. gesichert, um die Möglichkeit einer unberechtigten Auswertung von Telekommunikationsverkehrsdaten effektiv zu verhindern.

Aus der WO 2004/10998 A1 ist ferner ein Verfahren zum Übertragen von Nachrichten über ein Telekommunikationsnetz zwischen einer Anzahl von Teilnehmern mittels eines Telekommunikationsdienstes bekannt, wobei der Telekommunikationsdienst eine erste Nachricht mit einer ersten Größe eines ersten Teilnehmers des Telekommunikationsdienstes entgegennimmt, die für einen zweiten Teilnehmer des Telekommunikationsdienstes bestimmt ist, und wobei der Telekommunikationsdienst in Reaktion auf die Entgegennahme einer Nachricht eine zweite Nachricht an den zweiten Teilnehmer sendet, wobei die zweite Nachricht eine zweite Größe erhält, die in einer Relation zur ersten Größe steht, welche nicht umkehrbar eindeutig ist.

Die Veröffentlichung 'Kotzanikolaou P. "Data Retention and Privacy in Electronic Communications", Security and Privacy, IEEE, IEEE Service Center, Los Alamitos, CA, USA, Bd. 6, Nr. 5, 01.09.2008, Seiten 46-52' beschäftigt sich mit der Sicherung von Daten, insbesondere von Telekommunikationsverkehrsdaten, und beschreibt hierbei verschiedene Ansätze, wie solche Daten beim Telekommunikationsdienstleister sicher gespeichert und verarbeitet werden können, um etwa Strafverfolgungsbehörden dennoch Zugriff auf diese Daten zu gewähren.

### Aufgabe der Erfindung

Aufgabe der Erfindung ist es daher, ein Verfahren zur Sicherung von Telekommunikationsverkehrsdaten, die bei einer Nutzung zumindest eines Telekommunikationsdienstes von einer Anzahl von Teilnehmern bei dem Telekommunikationsdienstleister des Telekommunikationsdienstes anfallen, bereitzustellen, welche einen unberechtigten Zugriff bzw. Missbrauch der Telekommunikationsverkehrsdaten effektiv und effizient verhindern.

### Erfindungsgemäße Lösung

Diese Aufgabe wird erfindungsgemäß durch ein Verfahren zur Sicherung von Telekommunikationsverkehrsdaten nach dem unabhängigen Anspruch gelöst. Vorteilhafte Ausgestaltungen und Weiterbildungen der Erfindung sind in den abhängigen Ansprüchen angegeben.

Bereitgestellt wird also ein Verfahren zum Übertragen von Nachrichten über ein Telekommunikationsnetz zwischen einer Anzahl von Teilnehmern mittels eines Telekommunikationsdienstes, wobei
- der Telekommunikationsdienst zumindest eine erste Nachricht individueller erster Größe zumindest eines ersten Teilnehmers des Telekommunikationsdienstes entgegennimmt, die für zumindest einen zweiten Teilnehmer des Telekommunikationsdienstes bestimmt ist, und
- der Telekommunikationsdienst in Reaktion auf die Entgegennahme einer Nachricht zumindest eine zweite Nachricht an den zumindest einen zweiten Teilnehmer sendet, wobei die zumindest eine zweite Nachricht eine zweite Größe erhält, die in einer Relation zur ersten Größe steht, welche nicht umkehrbar eindeutig ist, und
- die Relation eine Abbildungsvorschrift repräsentiert, bei der jede Größe in eine Größenkategorie aus einer vorbestimmten Anzahl von Größenkategorien abgebildet wird, wobei jede Größenkategorie mehr als eine erste Größe umfasst, und die zweite Größe einen Wert aus derjenigen Größenkategorie erhält, in den die erste Größe abgebildet wird.

Die zumindest eine zweite Nachricht enthält die gleichen Nutzdaten wie die erste Nachricht.

Wenn mehrere zweite Nachrichten erzeugt werden, enthalten diese mehreren zweiten Nachrichten zusammen die gleichen Nutzdaten wie die erste Nachricht.

Der zweite Teilnehmer erhält also beim Empfang der einen oder mehreren zweiten Nachrichten die für ihn bestimmte Nachricht. Der Begriff der Nachricht steht auch für Dateien oder sonstige elektronisch versendbare Informationen.

Die Anzahl der Größenkategorien kann eins sein und der Wert kann der maximalen Größe der ersten Nachricht entsprechen.

Vorteilhaft ist es, wenn der ersten Nachricht Adress-Information hinsichtlich des zumindest einen zweiten Teilnehmer nur in verschlüsselter Form zugeordnet ist, die vorzugsweise nur der Telekommunikationsdienst entschlüsseln kann.

Vorteilhaft ist es auch, wenn der zweiten Nachricht Information hinsichtlich des ersten Teilnehmers nur in verschlüsselter Form zugeordnet wird, die vorzugsweise nur der zumindest eine zweite Teilnehmer entschlüsseln kann.

Vorteilhaft ist es auch, wenn die erste Nachricht homomorph verschlüsselt ist und vorzugsweise die zweite Nachricht ebenfalls homomorph verschlüsselt ist, wobei vorzugsweise die Verschlüsselung durch den Telekommunikationsdienst nicht verändert wird.

Vorteilhaft ist es auch, wenn die zumindest eine zweite Nachricht die gleichen Nutzdaten aufweist wie die zumindest eine erste Nachricht.

Auf diese Weise wird also erreicht, dass die Größen der ersten Nachrichten und der jeweiligen zweiten Nachrichten nicht mehr miteinander korrelieren, sodass nicht mehr durch Beobachtung der Größen der ersten und der zweiten Nachrichten auf Sender bzw. Empfänger geschlossen werden kann.

Weitere vorteilhafte Ausgestaltungen der Erfindung ergeben sich, wenn auch der zeitliche Zusammenhang zwischen der ersten Nachricht und der zweiten Nachricht aufgehoben wird.

### Kurzbeschreibung der Erfindung

Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: ein System zur Sicherung von Telekommunikationsverkehrsdaten zur Erläuterung des erfindungsgemäßen Verfahrens zur Sicherung der Telekommunikationsverkehrsdaten;
- Fig. 2: den zeitlichen Ablauf zwischen dem Empfang einer Nachricht und dem Senden einer Benachrichtigung; und
- Fig. 3: zwei Varianten für die Auswahl eines Zeitversatzes in Abhängigkeit vom Datenverkehr.

### Detaillierte Beschreibung der Erfindung

Mi dem System und dem erfindungsgemäßen Verfahren werden sowohl ein adäquater Datenschutz als auch hinreichend gute Möglichkeiten zur Datenauswertung, etwa zu Ermittlungszwecken, ermöglicht. Ein Missbrauch der gespeicherten Daten, insbesondere der Telekommunikationsverkehrsdaten wird effektiv vermieden, wobei insbesondere aus dem Datenverkehr keine Information abgeleitet werden kann, wer mit wem kommuniziert.

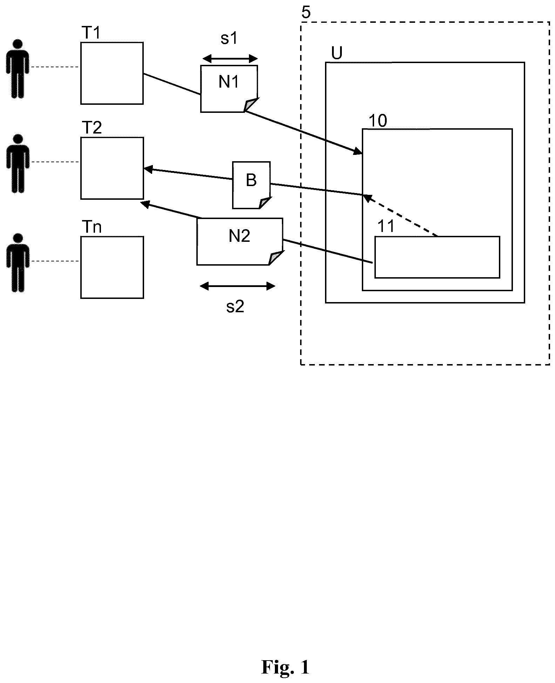

Fig. 1 zeigt ein System zur Sicherung von Telekommunikationsverkehrsdaten, die bei einer Nutzung eines Telekommunikationsdienstes 10 von einer Anzahl von Teilnehmern T1 bis Tn anfallen.

Ein Telekommunikationsdienstleister 5 stellt einen Telekommunikationsdienst 10 bereit, der in einer gesicherten Umgebung U ausgeführt wird. Durch den Telekommunikationsdienst 10 kann beispielsweise eine Nachrichtenbox bereitgestellt werden, in die für die Nachrichtenbox zugelassene erste Teilnehmer T1 erste Nachrichten für andere, zweite Teilnehmer T2 hinterlegen können. Eine Nachricht kann beispielsweise direkt in der Nachrichtenbox erzeugt werden oder über ein Kommunikationsnetzwerk in der Nachrichtenbox abgelegt werden. Eine erste Nachricht N1 kann hier beispielsweise ein elektronisches Dokument oder dergleichen sein.

Bei dem in Fig. 1 gezeigten Beispiel wird eine erste Nachricht N1, etwa ein elektronisches Dokument von einem ersten Teilnehmer T1 an den Telekommunikationsdienst 10 übertragen und dort beispielsweise in einer entsprechenden Nachrichtenbox abgelegt. Die Größe s1 der ersten Nachricht (elektronisches Dokument, Datei oder dergleichen) N1 ist prinzipiell beliebig; verschiedene erste Nachrichten haben also individuell unterschiedliche Größen. Nach Erhalt der ersten Nachricht N1 erzeugt der Telekommunikationsdienst 10 in der gesicherten Umgebung U zumindest eine zweite Nachricht N2, die sich in ihrer Größe s2 von der Größe der ersten Nachricht N1 unterscheidet. Diese zweite Nachricht wird dann von dem Telekommunikationsdienst 10 an zweiten Teilnehmer T2 versendet. Die zumindest eine zweite Nachricht N2 enthält die gleichen Nutzdaten wie die erste Nachricht N1. Aufgrund der unterschiedlichen Größen der ersten Nachricht N1 und der zumindest einen zweiten Nachricht N2 geht jedoch eine mögliche Zuordnung alleine über die Größe dieser Nachrichten verloren. Somit wird die Information, wer mit wem in dem Telekommunikationsnetz über den Telekommunikationsdienst 10 kommuniziert, unterdrückt.

Die zweite Größe s2 der zweiten Nachricht N2 steht erfindungsgemäß nicht umkehrbar eindeutiger Relation M zu der ersten Größe der ersten Nachricht. Dies heißt, dass aus der Größe einer zweiten Nachricht N2 nicht eindeutig auf die Größe der ersten Nachricht N1 geschlossen werden kann.

Eine solche Relation M ist zum Beispiel realisiert, wenn jede erste Nachricht auf eine einheitliche, konstante Größe vergrößert wird, z.B. auf die maximal im Telekommunikationssystem zulässige Größe smax. Weil letzteres aber die Übertragungskapazität des Systems sprengen kann, werden die ersten Nachrichten N1 entsprechend ihrer Größe in verschiedene Größenkategorien eingeteilt. Jede Größenkategorie wird durch einen minimalen und einen maximalen Wert definiert, stellt also ein Größenintervall dar. Jeder Größenkategorie ist ein jeweiliger Wert sk zugewiesen. Die jeweilige zweite Nachricht N2 erhält als Größe s2 den Wert sk derjenigen Kategorie, in welche erste Größe s1 der ersten Nachricht fällt. Als Wert sk für die jeweilige Kategorie kann der maximale Wert genommen werden. Dies ist vorteilhaft, weil dann die in die jeweilige Kategorie fallenden ersten Nachrichten N1 bei Bildung der zweiten Nachricht N2 lediglich vergrößert, nie aber verkleinert werden müssen. Eine Verkleinerung funktioniert auch, jedoch erfordert dies dann zur Verteilung des Inhalts (Nutzdaten) der ersten Nachricht auf mehrere zweite Nachrichten N2.

Die Zahl L der Kategorien kann variabel sein. Für die Netzkapazität vorteilhaft ist es, die Zahl L groß, die Intervalle also klein zu wählen, weil dann die einzelnen Nachrichten nicht so sehr in ihrer Größe verändert werden müssen. Dies ist möglich, wenn viele Nachrichten N1 gleichzeitig übertragen werden, der Verkehr also groß ist, weil dann immer noch genügend Nachrichten N1 in jede einzelne Kategorie fallen, um deren Herkunft zu verschleiern. Wegen der Vielzahl von Nachrichten N1 jeder Größenkategorie bleibt die Zuordnung der Nachrichten N2 zu den Nachrichten N1 verschleiert.

In weiterer Ausgestaltung der Erfindung wird zusätzlich noch die zeitliche Korrelation der empfangenen ersten Nachrichten N1 und der gesendeten Nachrichten N2 aufgehoben. Dies ist besonders (aber nicht nur) dann interessant, wenn der zweite Teilnehmer T2 die für ihn bestimmte zweite Nachricht N2 nicht unmittelbar sondern erst nach Benachrichtigung zugesandt erhalten soll.

In weiterer Ausgestaltung der Erfindung erzeugt der Telekommunikationsdienst 10 vor dem Senden der zweiten Nachricht N2 also eine Benachrichtigung B und sendet diese über das Kommunikationsnetzwerk an den zweiten Teilnehmer T2. Mit der Benachrichtigung B wird der zweite Teilnehmer T2 darüber informiert, dass der erste Teilnehmer T1 eine Nachricht N1 für ihn in der Nachrichtenbox des Telekommunikationsdienstes 10 hinterlegt hat.

In einer Ausgestaltung der Erfindung umfasst der Telekommunikationsdienst 10 einen Benachrichtigungsdienst 11, der für das Erzeugen der Benachrichtigung an den zweiten Teilnehmer T2 und für das Senden der Benachrichtigung zuständig ist.

Sämtliche bei dem Telekommunikationsdienstleister 5 anfallenden Daten, d.h. Verkehrsdaten und Nutzdaten werden in der gesicherten Umgebung U gespeichert und gegebenenfalls verarbeitet. Wie Eingangs erläutert, können sowohl die Nutzdaten als auch die Verkehrsdaten verschlüsselt, vorzugsweise doppelt verschlüsselt in der gesicherten Umgebung U gespeichert werden. Durch die doppelte Verschlüsselung ist gewährleistet, dass der Telekommunikationsdienstleister 5 keinen Zugriff auf die Nutz- und Verkehrsdaten erhält. Das Verschlüsseln bzw. doppelte Verschlüsseln der Daten wird vorzugsweise innerhalb der gesicherten Umgebung U durchgeführt, wobei auch die hierfür benötigten Schlüssel in der gesicherten Umgebung U erzeugt, gespeichert und verwaltet werden. Die gesicherte Umgebung U wird auch als versiegelte Infrastruktur bezeichnet und verhindert, dass weder der Betreiber der Infrastruktur noch der Telekommunikationsdienstanbieter bzw. Telekommunikationsdienstleister 5 während der Verarbeitung der Daten auf diese zugreifen kann.

Hierzu kann die gesicherte Umgebung U eine in Fig. 1 nicht gezeigte Einrichtung zum Erzeugen der benötigten kryptographischen Schlüssel umfassen. Um zu verhindern, dass die von dem Telekommunikationsdienstleister 5 in der gesicherten Umgebung U verschlüsselten Verbindungsdaten bzw. Nutzdaten ohne Weiteres von diesem mit Hilfe der entsprechenden Entschlüsselungs-Schlüssel wieder entschlüsselt werden können, ist es vorteilhaft, die verschlüsselten Daten mit einem weiteren Verschlüsselungsschlüssel nochmals zu verschlüsseln und die so doppelt verschlüsselten Daten in einer Speichereinrichtung der gesicherten Umgebung U abzulegen. Der zweite Verschlüsselungsschlüssel kann einer vertrauenswürdigen Instanz, etwa einem Notar, übergeben werden, der diesen nur auf eine richterliche Anordnung hin herausgeben kann.

Die gesicherte Umgebung U bzw. die versiegelte Infrastruktur kann eine Anzahl redundanter und verteilter Rechnerressourcen umfassen, welche jeweils eine Anzahl sogenannter Trusted Plattform Module (TPM), Leistungsschalter zur Unterbrechung der Stromversorgung der gesamten Rechnerressourcen, elektronmechanische Schlösser, eine Anzahl von Sensoren, mit denen der Zugang zu den Rechnerressourcen überwacht werden kann, umfassen können. In einer Ausgestaltung der Erfindung können die Rechnerressourcen Speichereinrichtungen aufweisen, in denen die kryptographischen Schlüssel gespeichert werden, wobei in einer Ausgestaltung der Erfindung die kryptographischen Schlüssel ausschließlich in flüchtigen Speichermedien gespeichert werden, sodass nach einer Unterbrechung der Stromversorgung die gespeicherten Schlüssel gelöscht werden. Das Löschen der kryptographischen Schlüssel kann etwa dann erforderlich sein, wenn sich jemand unbefugt Zutritt bzw. Zugang zu einer Rechnerressource verschafft. Damit die Schlüssel wieder hergestellt werden können, ist es vorteilhaft, wenn die kryptographischen Schlüssel über eine Synchronisationseinrichtung mit einer weiteren Speichereinrichtung zum Speichern kryptographischer Schlüssel synchronisiert werden.

Die Rechnerressourcen können mit einer sogenannten Versiegelungsüberwachungseinrichtung (Sealing Control) verbunden sein, welche die elektromechanischen Komponenten überwacht. Stellt die Versiegelungsüberwachungseinrichtung einen unbefugten Zugang zu einer Rechnerressource fest, kann sie die sofortige Synchronisierung sämtlicher in der Rechnerressource gespeicherten Schlüssel veranlassen und nach Beendigung der Synchronisation die Stromversorgung zu der kompromittierten Rechnerressource unterbrechen. Damit ist gewährleistet, dass sich aus einer kompromittierten Rechnerressource keine Entschlüsselungsschlüssel mehr herstellen lassen können.

Die Rechnerressourcen können ferner mit einer sogenannten Cloud Control gekoppelt sein, die vorgesehen sein kann, den Datenaustausch mit einem oder mehreren Teilnehmer T abzuwickeln. Die Cloud Control kann ebenfalls mit der Versiegelungsüberwachungseinrichtung gekoppelt sein, sodass die Versiegelungsüberwachungseinrichtung auch bei einem festgestellten Einbruch über ein Kommunikationsnetzwerk entsprechende Maßnahmen einleiten kann.

Die Teilnehmer T1 bis Tn des Telekommunikationsdienstes 10 können Smartphones, Tablet-PCs, herkömmliche Computer oder dergleichen sein, wobei in dem in Fig. 1 gezeigten Beispiel ein Teilnehmer jeweils einem Nutzer zugeordnet ist. Wie aus Fig. 1 ersichtlich ist, wird zwischen den Teilnehmern T1 und T2 und dem Telekommunikationsdienst 10 eine Datenübertragung abgewickelt, wobei Daten von dem ersten Teilnehmer T1 an den Telekommunikationsdienst 10 und Daten von dem Telekommunikationsdienst 10 an den zweiten Teilnehmer T2 übertragen werden, d.h. dass Daten von außerhalb der gesicherten Umgebung U zu dem Telekommunikationsdienst 10 gelangen bzw. Daten von dem Telekommunikationsdienst 10 aus der gesicherten Umgebung U heraus zu einem zweiten Teilnehmer T2 gelangen.

Auch wenn die Datenübertragung zwischen den beiden Teilnehmern T1, T2 und dem Telekommunikationsdienst 10 verschlüsselt abgewickelt wird, erhält der Telekommunikationsdienstleister 5 die Information, dass die Teilnehmer T1 und T2 an einer (gemeinsamen) Kommunikation beteiligt sind. Um zu verhindern, dass der Telekommunikationsdienstleister alleine aufgrund des Datenverkehrs (ohne hierfür den Inhalt der gesendeten bzw. empfangenen Daten kennen zu müssen) die Information erhält, dass der erste Teilnehmer T1 mit dem zweiten Teilnehmer T2 kommuniziert, ist es vorgesehen, dass die Benachrichtigung B von dem Telekommunikationsdienst 10 bzw. von dem Benachrichtigungsdienst 11 erzeugt wird und zeitversetzt an den zweiten Teilnehmer T2 gesendet bzw. übertragen wird. Durch das zeitversetzte Senden der Benachrichtigung B wird erreicht, dass der Telekommunikationsdienstleister 5 anhand des Datenverkehrs keinerlei Zuordnung zwischen der empfangenen ersten Nachricht N1 und der gesendeten Benachrichtigung B vornehmen kann und daher aus den Verkehrsdaten auch die Information, dass der Teilnehmer T1 mit dem Teilnehmer T2 kommuniziert, nicht ableiten kann. Durch das Vorsehen eines Zeitversatzes zwischen der Entgegennahme der Nachricht N und dem Senden der Benachrichtigung B werden diese von außerhalb der gesicherten Umgebung U zugänglichen Verkehrsdaten "verschleiert", sodass weder für den Telekommunikationsdienstleister 5 noch für einen unberechtigten Dritten erkennbar ist, wer mit wem und wie häufig kommuniziert.

In einer Ausgestaltung der Erfindung kann auch die Benachrichtigung B verschlüsselt werden bzw. verschlüsselt übertragen werden. Dies ist insbesondere dann vorteilhaft, wenn dem Empfänger der ersten Nachricht N1 mit der Bestätigungsnachricht B mitgeteilt werden soll, wer die erste Nachricht N1 für ihn beispielsweise in einer Nachrichtenbox hinterlegt hat oder um welchen Inhalt es sich bei der in der Nachrichtenbox hinterlegten Nachricht handelt.

Als besonders vorteilhaft hat es sich jedoch herausgestellt, wenn mit der Benachrichtigung B lediglich die Information an den Empfänger bzw. an den zweiten Teilnehmer T2 übertragen wird, dass eine Nachricht für ihn bei dem Telekommunikationsdienstleister 5 hinterlegt wurde. Wenn mit der Benachrichtigung B nur die Information übertragen wird, dass eine Nachricht hinterlegt wurde, kann die Benachrichtigung B für sämtliche Teilnehmer des Telekommunikationsdienstes identisch sein, sodass auf eine Verschlüsselung bzw. auf eine verschlüsselte Übertragung der Benachrichtigung B verzichtet werden kann. Damit kann die Last des Systems auf Seiten des Telekommunikationsdienstleisters für das Erzeugen und Versenden der Benachrichtigungen erheblich reduziert bzw. minimiert werden.

In einer Ausgestaltung der Erfindung ist es ausreichend, wenn die Nutzdaten der Benachrichtigung B lediglich eine Länge von einem Bit aufweisen, denn zum Zwecke der Signalisierung des zweiten Teilnehmers T2, dass irgendeine Nachricht für ihn beim Telekommunikationsdienstleister hinterlegt wurde, ist ein Bit ausreichend. Damit kann das Datenvolumen für die Übertragung der Benachrichtigungen B an die Teilnehmer des Telekommunikationsdienstes reduziert bzw. minimiert werden.

Nach Erhalt der Benachrichtigung B kann der zweite Teilnehmer T2 die für ihn bestimmte Nachricht N von dem Telekommunikationsdienstleister anfordern. Die Kommunikation zwischen dem ersten Teilnehmer T1 und dem zweiten Teilnehmer T2 kann dabei auf Basis einer Ende-zu-Ende-Verschlüsselung erfolgen, d.h., der erste Teilnehmer verschlüsselt die Nachricht und der zweite Teilnehmer entschlüsselt die erste Nachricht N1. Zum Verschlüsseln der Nachricht kann ein homomorphes Verschlüsselungsverfahren verwendet werden. Dann kann z.B. der Telekommunikationsdienst Operationen auf der Nachricht durchführen, z.B. deren Größe verändern, wie dies Gegenstand dieser Erfindung ist, ohne die Nachricht selbst entschlüsseln zu müssen. Das Ergebnis der Operation liegt dann ebenfalls in verschlüsselter Form vor.

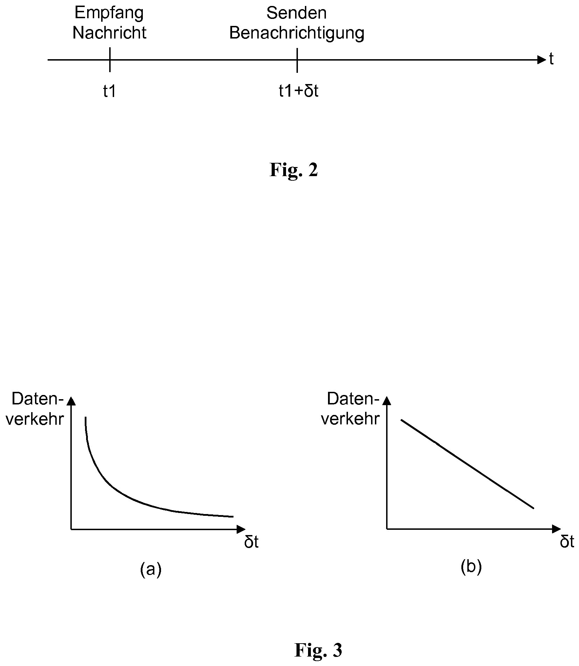

**Fig. 2** zeigt den zeitlichen Verlauf des Empfangs einer ersten Nachricht N1 und des Sendens einer Benachrichtigung.

Zum Zeitpunkt t1 empfängt der Telekommunikationsdienst des Telekommunikationsdienstleisters eine Nachricht von einem ersten Teilnehmer. Nach dem Empfang der Nachricht erzeugt der Telekommunikationsdienst bzw. der Benachrichtigungsdienst eine Benachrichtigung für den Teilnehmer, für den die empfangene Nachricht bestimmt ist, und sendet die Benachrichtigung an diesen Teilnehmer, wobei zwischen der Entgegennahme der Nachricht zum Zeitpunkt t1 und dem Senden der Benachrichtigung ein vorbestimmter Zeitversatz δt vorgesehen wird. D.h., die Benachrichtigung wird zum Zeitpunkt t1 + δt an den zweiten Teilnehmer gesendet.

Im einfachsten Fall der Erfindung kann ein konstanter Zeitversatz δt für alle zu versendenden Benachrichtigungen verwendet werden. Ein solcher konstanter Zeitversatz hat allerdings den Nachteil, dass dieser gegebenenfalls anhand einer Analyse des Datenverkehrs zwischen den Teilnehmern und dem Telekommunikationsdienst ermittelt werden kann, sodass bei Kenntnis des Zeitversatzes δt wieder eine Zuordnung einer Benachrichtigung B zu einer empfangenen Nachricht N möglich wird. Um dies zu verhindern, kann es vorgesehen sein, einen dynamischen Zeitversatz vorzusehen, der sich nach einer bestimmten Anzahl von Benachrichtigungen - im besten Fall nach jeder Benachrichtigung - ändert. Damit wird das Ermitteln eines Zeitversatzes durch Analyse des Datenverkehrs einerseits erheblich erschwert und andererseits kann ein ermittelter Zeitversatz lediglich für einige in der Vergangenheit versendete Benachrichtigungen herangezogen werden, um die Benachrichtigungen korrekt den jeweiligen empfangenen Benachrichtigungen zuordnen zu können, wohingegen ein so ermittelter Zeitversatz für eine derartige Zuordnung von Benachrichtigungen zu Nachrichten für zukünftig verschickte Benachrichtigungen bzw. empfangenen Nachrichten wertlos ist, weil sich der aktuelle Zeitversatz bis dahin bereits geändert hat.

Eine solche Dynamik des Zeitversatzes δt lässt sich beispielsweise dadurch erreichen, indem der Zeitversatz δt in Abhängigkeit vom Datenverkehr pro Zeiteinheit zwischen den Teilnehmern und dem Telekommunikationsdienst gewählt wird.

Beispiele für die Auswahl eines Zeitversatzes δt in Abhängigkeit vom Datenverkehr pro Zeiteinheit sind in Fig. 3 gezeigt.

Bei den in **Fig. 3** gezeigten Beispielen ist der Zeitversatz bei einem hohen Datenverkehr pro Zeiteinheit kleiner als bei einem geringen Datenverkehr pro Zeiteinheit d.h., dass bei einem hohen Datenverkehr ein geringerer Zeitversatz δt gewählt werden kann, als bei einem geringeren Datenverkehr, denn ein hoher Datenverkehr geht in der Regel mit einer großen Anzahl von Nachrichten einer großen Anzahl von Teilnehmern einher, sodass bereits aufgrund der großen Anzahl von versendenden Benachrichtigungen eine Zuordnung einer versendeten Benachrichtigung zu einer empfangenen Nachricht erschwert wird.

Bei dem in Fig. 3a gezeigten Beispiel ist der Zeitversatz δt nicht linear von dem Datenverkehr abhängig, während bei dem in Fig. 3b gezeigten Beispiel der Zeitversatz δt linear von dem Datenverkehr abhängig ist. Selbstverständlich können auch andere als die in Fig. 3a und Fig. 3b gezeigten Abhängigkeiten zwischen dem Zeitversatz δt und dem Datenverkehr gewählt werden.

In einer Ausgestaltung der Erfindung kann der Datenverkehr pro Zeiteinheit die Anzahl der entgegengenommenen Nachrichten N pro Zeiteinheit umfassen.

Um eine noch bessere Dynamik des ausgewählten Zeitversatzes δt zu erreichen, kann es vorgesehen sein, wenn der für das Versenden einer Benachrichtigung benötigte Zeitversatz δt zufällig aus einem Zeitversatzintervall ausgewählt wird. Hierbei kann der Zeitversatz δt für eine bestimmte Anzahl von zu versendenden Benachrichtigungen aus dem Zeitversatzintervall ausgewählt werden. Alternativ kann der Zeitversatz δt für jede einzelne zu versendende Benachrichtigung zufällig aus dem Zeitversatzintervall ausgewählt werden. Damit wird erreicht, dass selbst bei einer umfassenden Analyse des Datenverkehrs zwischen den Teilnehmern und dem Telekommunikationsdienst keinerlei Rückschlüsse über die Zuordnung der Benachrichtigungen zu den empfangenen Nachrichten möglich ist, weil einerseits jeder Zeitversatz einer bestimmten Zufälligkeit unterliegt und weil andererseits aufgrund der zufälligen Auswahl der Zeitversätze für die zu versendenden Benachrichtigungen die Reihenfolge der versendeten Benachrichtigungen nicht mehr der Reihenfolge der eingegangenen Nachrichten entspricht.

Die Zufallskomponente bei der zufälligen Auswahl des Zeitversatzes aus einem Zeitversatzintervall kann noch weiter verbessert werden, indem die Intervallgrenzen des Zeitversatzintervalls in Abhängigkeit vom Datenverkehr pro Zeiteinheit zwischen den Teilnehmern und dem Telekommunikationsdienst gewählt werden. Dadurch wird gewährleistet, dass bei einem großen Datenverkehr kleine Zeitversätze δt zufällig aus dem Zeitversatzintervall ausgewählt werden und bei einem geringen Datenverkehr größere Zeitversätze δt aus dem Zeitversatzintervall ausgewählt werden.

In einer weiteren Ausgestaltung der Erfindung können zusätzlich bzw. alternativ zu den vorstehend genannten Maßnahmen für die Auswahl eines Zeitversatzes die erzeugten Benachrichtigungen zufällig in eine Benachrichtigungswarteschlange eingereiht werden, sodass die Reihenfolge der zu versendenden Benachrichtigungen nicht mehr der Reihenfolge der empfangenen Nachrichten entspricht. Bei Verwendung einer solchen Warteschlange, in der die zu versendenden Benachrichtigungen zufällig eingereiht werden, kann auf die zufällige Auswahl eines Zeitversatzes aus einem Zeitversatzintervall auch verzichtet werden, denn aufgrund der zufälligen Einreihung der Benachrichtigungen in die Warteschlange ist auch bei einem konstanten Zeitversatz gewährleistet, dass eine gesendete Benachrichtigung nicht korrekt einer empfangenen Nachricht zugeordnet werden kann.

### Bezugszeichen:

- 5: Telekommunikationsdienstleister
- 10: Telekommunikationsdienst
- 11: Benachrichtigungsdienst
- δt: Zeitversatz zwischen Datenempfang und Senden der Benachrichtigung
- B: Benachrichtigung zwischen Telekommunikationsdienst und Teilnehmer
- D: Daten der Benachrichtigung
- N: Nachricht zwischen Teilnehmer und Telekommunikationsdienst
- T: Teilnehmer
- T1: erster Teilnehmer
- T2: zweiter Teilnehmer
- U: gesicherte Umgebung

## Patentansprüche

1. Verfahren zum Übertragen von Nachrichten (N1, N2) über ein Telekommunikationsnetz zwischen einer Anzahl von Teilnehmern (T1, T2) mittels eines Telekommunikationsdienstes (5, 10), wobei
- der Telekommunikationsdienst (5, 10) zumindest eine erste Nachricht (N1) individueller erster Größe (s1) zumindest eines ersten Teilnehmers (T1) des Telekommunikationsdienstes (10) entgegennimmt, die für zumindest einen zweiten Teilnehmer (T2) des Telekommunikationsdienstes bestimmt ist,
- der Telekommunikationsdienst (5, 10) in Reaktion auf die Entgegennahme einer Nachricht (N1) zumindest eine zweite Nachricht (N2) an den zumindest einen zweiten Teilnehmer (T2) sendet, wobei die zumindest eine zweite Nachricht (N2) eine zweite Größe (s2) erhält, die in einer Relation (M) zur ersten Größe (s1) steht, welche nicht umkehrbar eindeutig ist, und
- die Relation (M) eine Abbildungsvorschrift repräsentiert, bei der jede Größe (s1) in eine Größenkategorie aus einer vorbestimmten Anzahl (L) von Größenkategorien abgebildet wird, wobei jede Größenkategorie mehr als eine erste Größe (s1) umfasst, und die zweite Größe (s2) einen Wert (sk) aus derjenigen Größenkategorie erhält, in den die erste Größe (s1) abgebildet wird.

2. Verfahren nach Anspruch 1, wobei der Wert (sk) insbesondere dem Maximalwert (skmax) der Größenkategorie entspricht.

3. Verfahren nach Anspruch 2, wobei die Anzahl (L) der Größenkategorien eins ist und der Wert (sk) der maximalen Größe (s1_max) der ersten Nachricht (N1) entspricht.

4. Verfahren nach einem der vorherigen Ansprüche, wobei der ersten Nachricht (N1) Adress-Information hinsichtlich des zumindest einen zweiten Teilnehmer (T2) nur in verschlüsselter Form zugeordnet ist, die vorzugsweise nur der Telekommunikationsdienst (10) entschlüsseln kann.

5. Verfahren nach einem der vorherigen Ansprüche, wobei der zweiten Nachricht (N2) Information hinsichtlich des ersten Teilnehmers (T1) nur in verschlüsselter Form zugeordnet wird, die vorzugsweise nur der zumindest eine zweite Teilnehmer (T2) entschlüsseln kann.

6. Verfahren nach einem der vorherigen Ansprüche, wobei die erste Nachricht (N1) homomorph verschlüsselt ist und vorzugsweise die zweite Nachricht (N2) ebenfalls homomorph verschlüsselt ist, wobei vorzugsweise die Verschlüsselung durch den Telekommunikationsdienst (10) nicht verändert wird.

7. Verfahren nach einem der vorherigen Ansprüche, wobei die zumindest eine zweite Nachricht (N2) die gleichen Nutzdaten aufweist wie die zumindest eine erste Nachricht (N1).

## Claims

1. A method for transmitting messages (N1, N2) via a telecommunication network between a number of users (T1, T2) using a telecommunication service (5, 10), wherein
- the telecommunication service (5, 10) receives at least one first message (N1) of at least one first user (T1) of the telecommunication service (10), said message having an individual, first size (s1) and being intended for at least one second user (T2) of the telecommunication service,
- in response to receiving a message (N1), the telecommunication service (5, 10) transmits at least one second message (N2) to the at least one second user (T2), said at least one second message (N2) getting a second size (s2) which bears a relation (M) to the first size (s1) which is not reversibly unambiguous, and
- the relation (M) represents a mapping instruction in which each size (s1) is mapped into a size category from among a predetermined number (L) of size categories, each size category comprising more than one first size (s1) and the second size (s2) getting a value (sk) from the size category into which the first size (s1) is mapped.

2. The method as claimed in claim 1, wherein the value (sk) corresponds in particular to the maximum value (skmax) of said size category.

3. The method as claimed in claim 2, wherein the number (L) of size categories is one and the value (sk) corresponds to the maximum size (s1_max) of the first message (N1).

4. The method as claimed in any of the preceding claims, wherein address information with respect to the at least one second user (T2) is associated with the first message (N1) only in an encrypted form and may preferably be decrypted only by the telecommunication service (10).

5. The method as claimed in any of the preceding claims, wherein information with respect to the first user (T1) is associated with the second message (N2) only in an encrypted form and may preferably be decrypted only by the at least one second user (T2).

6. The method as claimed in any of the preceding claims, wherein the first message (N1) is homomorphically encrypted and preferably the second message (N2) is also homomorphically encrypted, said encryption being preferably left unchanged by the telecommunication service (10).

7. The method as claimed in any of the preceding claims, wherein the at least one second message (N2) has the same useful data as the at least one first message (N1).

## Revendications

1. Procédé destiné à transmettre des messages (N1, N2), via un réseau de télécommunication, entre une pluralité d'utilisateurs (T1, T2) au moyen d'un service de télécommunication (5, 10), lors duquel
- le service de télécommunication (5, 10) reçoit au moins un premier message (N1) d'une première taille individuelle (s1) en provenance d'au moins un premier utilisateur (T1) du service de télécommunication (10) lequel est adressé à au moins un deuxième utilisateur (T2) dudit service de télécommunication,
- le service de télécommunication (5, 10) émet, en réaction à la réception d'un message (N1), au moins un deuxième message (N2) audit au moins un deuxième utilisateur (T2), ledit au moins un deuxième message (N2) étant pourvu d'une deuxième taille (s2) qui se trouve dans une relation (M) qui n'est pas biunivoque par rapport à la première taille (s1), et
- la relation (M) représente une règle d'application dans laquelle chaque taille (s1) est appliquée dans une catégorie de tailles prise parmi un nombre prédéterminé (L) de catégories de tailles, chaque catégorie de tailles comprenant plus d'une première taille (s1), et la deuxième taille (s2) étant pourvue d'une valeur (sk) prise dans la catégorie de tailles dans laquelle la première taille (s1) est appliquée.

2. Procédé selon la revendication 1, lors duquel la valeur (sk) correspond en particulier à la valeur maximale (skmax) de la catégorie de tailles.

3. Procédé selon la revendication 2, lors duquel le nombre (L) des catégories de tailles est égal à un et la valeur (sk) correspond à la grandeur maximale (s1_max) du premier message (N1).

4. Procédé selon l'une quelconque des revendications précédentes, lors duquel une information concernant l'adresse dudit au moins un deuxième utilisateur (T2) est attribuée au premier message (N1) uniquement sous forme chiffrée, laquelle peut être déchiffrée de préférence uniquement par le service de télécommunication (10).

5. Procédé selon l'une quelconque des revendications précédentes, lors duquel une information relative au premier utilisateur (T1) est attribuée au deuxième message (N2) uniquement sous forme chiffrée, laquelle peut être déchiffrée de préférence uniquement par ledit au moins un deuxième utilisateur (T2).

6. Procédé selon l'une quelconque des revendications précédentes, lors duquel le premier message (N1) est chiffré de manière homomorphe, et le deuxième message (N2) est de préférence chiffré également de manière homomorphe, le chiffrement n'étant de préférence pas modifié par le service de télécommunication (10).

7. Procédé selon l'une quelconque des revendications précédentes, lors duquel ledit au moins un deuxième message (N2) présente les mêmes données utiles que ledit au moins un premier message (N1).
